# FASCICULE DE BREVET EUROPEEN

(11) **EP 0 676 232 B1**
(45) Date de publication et mention de la délivrance du brevet: **24.07.2002**
(21) Numéro de dépôt: 95400727.4
(22) Date de dépôt: 03.04.1995
(51) Int. Cl.: B01D 53/94, B01J 23/00

(54) **L'utilisation d'un catalyseur à base de spinelles pour la réduction des émissions des oxydes d'azote**
Verwendung eines Spinell-enthaltenden Katalysator zur Reduktion von Stickstoffoxidemissionen
Use of an Spinel catalyst for the reduction of nitrogen oxide emissions

(30) Priorité: 08.04.1994 FR 9404158
(43) Date de publication de la demande: 11.10.1995
(73) Titulaire: RHODIA CHIMIE, 92408 Courbevoie Cédex (FR)
(72) Inventeur: Barthe, Philippe, F-95270 Saint-Martin-du-Tertre (FR); Macaudiere, Pierre, F-92600 Asnières-sur-Seine (FR); Seguelong, Thierry, F-92000 Nanterre (FR)
(74) Mandataire: Dubruc, Philippe

(56) Documents cités:
- EP-A- 0 210 681
- DE-A- 3 727 642
- FR-A- 2 146 358
- US-A- 3 904 553
- US-A- 4 228 138
- US-A- 4 274 981

## Description

La présente invention concerne l'utilisation de catalyseurs pour la réduction des émissions des oxydes d'azote à base de spinelle pour le traitement de gaz d'échappement

On sait que la réduction des émissions des oxydes d'azote (NOx) des gaz d'échappement des moteurs d'automobile notamment est effectué à l'aide de catalyseurs "trois voies" qui utilisent stoechiométriquement les gaz réducteurs présents dans le mélange. Tout excès d'oxygène se traduit par une détérioration brutale des performances du catalyseur.

Ainsi, pour cette catalyse "trois voie", le document US-A-3904553 décrit des catalyseurs de structure spinelle, de même que US-A-4228138 qui mentionne des spinelles à base de fer et de cobalt. FR-A-2146358 fait état d'un catalyseur à base d'oxyde de cobalt et EP-A-210681 d'une spinelle à base d'aluminium et de magnésium. US-A-4274981 décrit aussi des aluminates de type spinelle pour la catalyse "trois voies". DE-A-3727642 décrit un catalyseur à base de carbone et contenant de l'azote pour le traitement de gaz.

Or, certains moteurs comme les moteurs diesel ou les moteurs essence fonctionnant en mélange pauvre (lean bum) sont économes en carburant mais émettent des gaz d'échappement qui contiennent en permanence un large excès d'oxygène d'au moins 5% par exemple. Un catalyseur trois voies standard est donc sans effet sur les émissions en NOx de ces moteurs. Par ailleurs, la limitation des émissions en NOx est rendue impérative par le durcissement des normes en post combustion automobile qui s'étendent maintenant à ce type de moteurs.

Il existe donc un besoin réel d'un catalyseur efficace pour la réduction des émissions des NOx.

L'objet de l'invention est donc de trouver un catalyseur qui puisse être utilisé pour le traitement de gaz d'échappement à teneur élevée en oxygène.

Dans ce but et selon un premier mode de réalisation, l'invention concerne l'utilisation pour le traitement de gaz d'échappement présentant un excès en oxygène d'au moins 5%, en vue de la réduction des émissions des oxydes d'azote, d'un catalyseur comprenant soit un oxyde massique de structure spinelle et de formule ZnAl₂O₄ soit un oxyde de formule MgAl₂O₄, ledit oxyde ayant été obtenu par un procédé dans lequel on forme une solution ou suspension de sels des éléments constitutifs de la spinelle, on sèche par atomisation et on calcine le produit ainsi obtenu.

Selon un deuxième mode de réalisation, l'invention concerne l'utilisation pour le traitement de gaz d'échappement présentant un excès en oxygène d'au moins 5%, en vue de la réduction des émissions des oxydes d'azote, d'un catalyseur comprenant un oxyde de structure spinelle normale ou spinelle inverse qui répond à la formule (I) :

AB₂O₄

dans laquelle :
- soit B est le gallium, auquel cas A est au moins un élément choisi dans les groupes IIa, Ib, IIb, IIIb, IVb et Vb ainsi que les éléments de transition de la classification périodique;
- soit B est l'aluminium, auquel cas A est au moins un élément choisi dans les groupes IIa, à l'exception du magnésium, IIIb, IVb et Vb.

L'invention concerne aussi plus particulièrement l'utilisation, pour le traitement précité, d'un oxyde qui répond soit à la formule (I) dans laquelle B est le gallium et A est au moins un élément choisi dans le groupe comprenant Mg, Ti, Mn, Fe, Zn et Sn ou une combinaison de Zn et Sn; soit à la formule (1) dans laquelle B est l'aluminium et A est au moins un élément choisi dans le groupe comprenant Ti, Mn, Fe et Sn ou une combinaison de Zn et Sn.

Les catalyseur utilisés dans le cadre de la présente invention présentent une zone de fonctionnement qui est au moins comprise entre 450 et 600°C. Ils possèdent en outre une stabilité qui leur permet de rester actifs même après des montées en température supérieures à 600°C ou même supérieures à 700°C.

D'autres caractéristiques, détails et avantages de l'invention apparaîtront encore plus complètement à la lecture de la description qui va suivre, ainsi que des divers exemples concrets mais non limitatifs destinés à l'illustrer.

La classification périodique des éléments à laquelle il est fait référence est celle publiée dans le Supplément au Bulletin de la Société Chimique de France n° 1 (janvier 1966). Par éléments de transition, on entend ceux des groupes IVa à VIII.

Comme on l'a indiqué plus haut, les catalyseur utilisés dans le cadre de la présente invention peuvent se présenter selon deux modes de réalisations qui vont être décrits plus particulièrement ci-dessous.

Pour l'ensemble de la description on entend par spinelle les composés de formule globale et générale AB₂O₄ dans laquelle A et B sont habituellement des ions de transition de taille voisine, généralement A étant un ion divalent et B un ion trivalent. Par structure spinelle inverse, on entend les composés de formule générale B(AB)O₄. Enfin, tout ce qui est décrit par la suite au sujet de la structure spinelle s'applique autant à la structure spinelle normale qu'à la structure spinelle inverse.

Dans le cas du premier mode, le catalyseur comprend à titre de phase active une spinelle de formule ZnAl₂O₄. Dans ce même cas, cette phase active se présente sous forme d'un oxyde massique. On entend par là que la spinelle ZnAl₂O₄ est présente dans l'ensemble du volume de la phase active d'une manière homogène et non pas par exemple en surface de celle-ci.

Dans le cas du second mode de réalisation, le catalyseur comprend à titre de phase active une spinelle normale ou une spinelle inverse de formule différente de ZnAl₂O₄ et qui répond à la formule (I) donnée précédemment.

La description qui vient d'être faite s'applique aussi à l'utilisation de composés qui se présentent sous la forme d'un mélange de spinelles à structure normale ou inverse.

En outre, il a été mentionné dans la composition des catalyseurs utilisés, des éléments comme Zn et Sn qui sont des éléments volatils. Or, on sait qu'avec de tels éléments, compte tenu de la température de préparation des spinelles et du fait de la volatilisation de ces éléments, on forme des produits présentant des lacunes et qui peuvent être représentés par la formule A₁₋ₓBₓB₂₋ₓO₄. De tels produits peuvent bien sûr être utilisés dans le cadre de l'invention. On peut noter que des produits lacunaires du même type peuvent aussi être préparés en utilisant des quantités de produits de départ en défaut stoechiométrique. Ces produits sont eux aussi utilisables dans le cadre de la présente invention.

Les catalyseur utilisés dans le cadre de la présente invention peuvent comprendre, outre la phase active à base de spinelle du type décrit ci-dessus, tout type de métaux précieux utilisables habituellement en catalyse tel que par exemple le platine, le palladium, le rhodium, le ruthénium, l'argent, l'or, l'iridium ou le rhénium.

En outre, les phases actives de ces catalyseurs peuvent être mises sur tout type de support utilisé habituellement dans ce domaine technique, comme, par exemple, les oxydes de lanthanide comme CeO₂, ZrO₂, Al₂O₃, TiO₂ ou SiO₂, ces support pouvant être éventuellement dopés, ou encore les zéolites, les silicates, les phosphates de silicoaluminium cristallins, les phosphates d'aluminium cristallins, ces silicates ou phosphates pouvant comprendre des substituants métalliques comme par exemple le titane, le fer, le magnésium, le zinc, le manganèse, le cobalt, le gallium, le lanthane, le cuivre, le molybdène, le chrome, le germanium ou le bore.

Les catalyseur utilisés dans le cadre de la présente invention peuvent être préparés par différents procédés.
Selon un premier procédé, l'oxyde de structure spinelle normale ou spinelle inverse constituant la phase active du catalyseur est obtenu par chamottage de précurseurs des éléments constitutifs de la spinelle.

Ces précurseurs sont généralement des oxydes. Ils sont mélangés et broyés puis éventuellement mis en forme sous pression, par exemple pastillés. Le mélange est ensuite calciné à une température et sur une durée suffisantes pour obtenir la phase recherchée. Généralement, la température est d'au moins 700°C. La durée de la calcination est d'autant plus faible que la température est élevée. La calcination se fait habituellement sous air et elle peut être réalisée sous atmosphère statique ou sous balayage. Si nécessaire, plusieurs cycles de calcination peuvent être effectués éventuellement avec des broyages et des mises en forme intermédiaires.

Selon un second procédé, on forme tout d'abord une solution ou suspension de sels des éléments constitutifs de la spinelle. Le cas échéant, on peut aussi mettre en suspension le support avec lesdits éléments constitutifs.

A titre de sels, on peut choisir les sels d'acides inorganiques comme les nitrates, les sulfates ou les chlorures, les nitrates étant les sels préférés.

On peut aussi utiliser les sels d'acides organiques et notamment les sels d'acides carboxyliques aliphatiques saturés ou les sels d'acides hydroxycarboxyliques. A titre d'exemples, on peut citer les formiates, acétates, propionates, oxalates ou les citrates.

La solution ou suspension ainsi formée est ensuite séchée.

On peut utiliser tout type de séchage connu mais le séchage se fait de préférence par atomisation, c'est à dire par pulvérisation du mélange dans une atmosphère chaude (spray-drying). L'atomisation peut être réalisée au moyen de tout pulvérisateur connu en soi, par exemple par une buse de pulvérisation du type pomme d'arrosoir ou autre. On peut également utiliser des atomiseurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions Gerge Godwin - London).

On notera que l'on peut également mettre en oeuvre l'opération d'atomisation-séchage au moyen d'un réacteur "flash", par exemple du type mis au point par la Demanderesse et décrit notamment dans les demandes de brevet français n° 2 257 326, 2 419 754 et 2 431 321. Dans ce cas, les gaz traitants (gaz chauds) sont animés d'un mouvement hélicoïdal et s'écoulent dans un puits-tourbillon. Le mélange à sécher est injecté suivant une trajectoire confondue avec l'axe de symétrie des trajectoires hélicoïdales desdits gaz, ce qui permet de transférer parfaitement la quantité de mouvement des gaz au mélange à traiter. Les gaz assurent ainsi en fait une double fonction : d'une part la pulvérisation, c'est à dire la transformation en fines gouttelettes, du mélange initial, et d'autre part le séchage des gouttelettes obtenues. Par ailleurs, le temps de séjour extrêmement faible (généralement inférieur à 1/10 de seconde environ) des particules dans le réacteur présente pour avantage, entre autres, de limiter d'éventuels risques de surchauffe par suite d'un contact trop long avec les gaz chauds.

Selon les débits respectifs des gaz et du mélange à sécher, la température d'entrée des gaz est, par exemple, comprise entre 400 et 900°C et plus particulièrement entre 600 et 800°C, la température du solide séché entre 110 et 250°C par exemple, de préférence entre 125 et 200°C.

Après le séchage, le produit obtenu est calciné. La calcination se fait à une température suffisante pour obtenir la formation de la phase désirée. Habituellement, cette température est d'au moins 600°C. La durée de la calcination peut varier entre une demi-heure et 10 heures par exemple. Cette durée est d'autant plus faible que la température de calcination est élevée. La calcination se fait habituellement sous air et elle peut être réalisée sous atmosphère statique ou sous balayage.

Un troisième procédé peut être mis en oeuvre pour la préparation des catalyseur utilisés dans le cadre de la présente invention. Dans ce procédé, on forme tout d'abord un mélange de précurseurs des éléments constitutifs de la spinelle et d'une source de carbone et d'azote, ce mélange pouvant se présenter éventuellement sous forme d'une solution.

Les précurseurs utilisés habituellement sont des sels des éléments et plus particulièrement des nitrates ou des chlorures.

La source de carbone et d'azote est habituellement un composé organique comme par exemple l'urée ou la glycine.

On effectue ensuite une combustion du mélange ainsi formé en le portant à une température suffisante, généralement à au moins 300°C, par exemple à 500°C. Dans le cas d'une solution, celle-ci est portée à ébullition dans le four avant de s'enflammer. On peut obtenir transitoirement dans le mélange des températures de calcination très élevées. La température de réaction peut être modulée en modifiant le rapport molaire source de carbone et d'azote/précurseur.

A la fin de la combustion le produit est broyé si nécessaire.

Bien entendu, il est tout à fait possible dans le cadre de la présente invention d'utiliser d'autres procédés de préparation des phases actives que ceux qui ont été décrits plus haut. On peut citer, par exemple, les voies sol-sel, sol-gel ou les voies par précipitation aqueuse ou organique.

Les catalyseurs peuvent être utilisés sous diverses formes telles que granulés, billes, cylindres ou nid d'abeille de dimensions variables. Ils peuvent aussi être utilisés dans des systèmes catalytiques comprenant un revêtement (wash coat) à base des phases actives décrites plus haut, sur un substrat du type par exempte monolithe métallique ou en céramique.

L'invention s'applique au traitement des gaz d'échappement qui présentent un excès d'oxygène. On entend par excès d'oxygène. une teneur (exprimée en volume) en cet élément d'au moins 5%, plus particulièrement d'au moins 10%, cette teneur pouvant par exemple se situer entre 5 et 15%. Dans un tel cas, une des réactions que l'on cherche à catalyser est la réaction HC (hydrocarbures) + NOₓ.

L'invention s'applique à la fabrication et l'utilisation de tout système catalytique du type mentionné plus haut à base des catalyseurs qui ont été décrits précédemment pour le traitement des gaz d'échappement présentant un excès d'oxygène.

Les hydrocarbures qui peuvent être utilisés comme agent réducteur pour l'élimination des NOx sont notamment les gaz ou les liquides des familles des carbures saturés, des carbures éthyléniques, des carbures acétyléniques, des carbures aromatiques et les hydrocarbures des coupes pétrolières comme par exemple le méthane, l'éthane, le propane, le butane, le pentane, l'hexane, l'éthylène, le propylène, l'acétylène, le butadiène, le benzène, le toluène, le xylène, le kérosène et le gaz oil.

Les composés organiques contenant de l'oxygène peuvent être notamment les alcools du type par exemple alcools saturés comme le méthanol, l'éthanol ou le propanol; les éthers comme l'éther méthylique ou l'éther éthylique; les esters comme l'acétate de méthyle et les cétones.

Les gaz susceptibles d'être traités par la présente invention sont par exemple ceux issus de turbines à gaz, de chaudières de centrales thermiques ou encore de moteurs à combustion interne, notamment de moteurs diesel ou de moteurs fonctionnant en mélange pauvre.

Des exemples vont maintenant être donnés.

Dans les exemples donnés ci-dessous, les produits obtenus sont testés de la manière suivante pour évaluer leurs performances catalytiques.

1,5 g du catalyseur en poudre sont chargés dans un réacteur en quartz.

Le mélange réactionnel à l'entrée du réacteur a la composition suivante (en volume) :
- NO = 900 vpm
- C₃H₆ = 900 vpm
- O₂=5%
- CO₂ = 10%
- H₂O = 10%
- N₂ = qsp 100%

Le débit global est de 10 Nl/h.

La VVH est de l'ordre de 10000 h⁻¹.

Les signaux de HC (C₃H₆), NO et NOₓ (NOₓ = NO + NO₂) sont enregistrés en permanence ainsi que la température dans le réacteur.

Le signal de HC est donné par un détecteur BECKMAN d'HC totaux, basé sur le principe de la détection par ionisation de flamme.

Les signaux de NO et NOₓ sont donnés par un analyseur de NOₓ ECOPHYSICS, basé sur le principe de la chimie-luminescence : il donne les valeurs de NO, NOₓ et NO₂, cette dernière étant calculée par différence des signaux de NOₓ et NO.

L'activité catalytique est mesurée à partir des signaux HC, NO, NO₂ et NOₓ en fonction de la température lors d'une montée en température programmée de 20 à 700°C à raison de 3,75°C/mn et à partir des relations suivantes :
- Le taux de conversion en NO (TNO) en % qui est donné par :
   T(NO) = 100(NO°-NO)/ NO° avec NO° signal de NO à l'instant t = 0 qui correspond au début de la programmation de température.
- Le taux de conversion de HC (THC) en % qui est donné par :
   T (HC) = 100(HC°-HC)/HC° avec HC° signal de HC à l'instant t = 0 qui correspond au début de la programmation de température.
- Le taux de conversion globale des NOₓ (TNOₓ) en % qui est donné par :
   T(NOₓ) = 100(NOₓ°-NOₓ)/NOₓ° avec NOₓ° signal de NOₓ à l'instant t = 0 qui correspond au début de la programmation de température.

Enfin, on entend par surface spécifique, la surface spécifique B.E.T. determinée par adsorption d'azote conformément à la norme ASTM D 3663-78 établie à partir de la méthode BRUNAUER - EMMETT- TELLER décrite dans le périodique "The Journal of the American Society, 60, 309 (1938)".

### EXEMPLE 1

Cet exemple concerne un catalyseur de formule ZnAl₂O₄.

On utilise comme précurseurs des oxydes (ZnO, Al₂O₃) mélangés et broyés dans un mortier en agathe, puis pastillés à 1 tonne/cm². Le mélange est ensuite calciné sous air dans un creuset d'alumine.

Le composé ZnAl₂O₄ est obtenu après 2 cycles de calcination à 1000°C pendant 15 h, avec un broyage et un pastillage intermédiaire. Dans ces conditions, la diffraction des rayons X montre la présence de ZnAl₂O₄. La surface spécifique BET est inférieure à 0,50 m²/g.

Les performances du catalyseur sont données dans le tableau 1 ci-dessous.

Ces performances montrent :
- un bon niveau d'activité (maximum à environ 20% de conversion globale de NO_{X} à 540°C) compte tenu de la très faible surface spécifique (< 0,50 m²/g);
- une zone de conversion des NOx allant de 450 à 600°C.

**TABLEAU 1**

| **Température** | **THC** | **TNO** | **TNO**_{**x**} |
|---|---|---|---|
| 399 | 0,0 | 0,0 | 0,0 |
| 450 | 2,3 | 0,0 | 2,1 |
| 498 | 11,1 | 3,1 | 11,2 |
| 550 | 45,6 | 9,9 | 19,6 |
| 599 | 86,0 | 4,7 | 3,3 |
| 649 | 95,2 | 10,6 | 1,9 |

### EXEMPLE 2

Cet exemple concerne un catalyseur de même nature que celui de l'exemple 1, mais préparé par une voie différente. Un mélange de nitrate à 0,2 mol/l en Zn et 0,4 mol/l en Al est séché par atomisation sur un BUCHI. La température d'entrée des gaz est de 240°C et la température de sortie du produit est de 115°C, avec un débit d'atomisation de 800 ml/h. La poudre ainsi obtenue est calcinée 6 h à 800°C dans une nacelle d'alumine, avec une montée programmée à 5°C/min. : la diffraction des rayons X met en évidence la phase ZnAl₂O₄ parfaitement cristallisée. Dans ce cas là, la surface spécifique BET est de 33 m²/g.

Les performances du catalyseur sont données dans le tableau 2 ci-dessous qui montre :
- un niveau d'activité remarquable (maximum d'environ 40% de taux de conversion globale de NOₓ à 550°C, compte tenu de la surface spécifique du catalyseur (33 m²/g);
- une large zone de conversion des NOx allant de 350 à 600°C;

**TABLEAU 2**

| **Température** | **THC** | **TNO** | **TNO**_{**x**} |
|---|---|---|---|
| 350 | 1,1 | 6,4 | 4,0 |
| 400 | 7,4 | 7,1 | 8,1 |
| 449 | 25,9 | 16,7 | 21,4 |
| 500 | 56,9 | 31,9 | 36,3 |
| 549 | 80,4 | 36,1 | 40,2 |
| 600 | 94,8 | 20,2 | 17,8 |
| 649 | 97,7 | 21,9 | 6,4 |

### EXEMPLE 3

Cet exemple concerne un catalyseur de formule Sn_{0,025}Zn_{0,975}Al₂O₄.

Un mélange de nitrates à 0,195 mol/l en Zn, 0,4 mol/l en Al et 0,005 mol/l de Sn est séché par atomisation sur un BUCHI. La température d'entrée des gaz est de 245°C et la température de sortie du produit est de 115°C avec un débit d'atomisation de 850 ml/h. La poudre ainsi obtenue est calcinée 6 h à 800°C dans une nacelle alumine, avec une montée programmée à 5°C/min. La diffraction des rayons X réalisée sur cette poudre met en évidence une phase pure dont le système de pics de Bragg est similaire à ZnAl₂O₄. La surface spécifique BET est de 34 m²/g.

Les performances du catalyseur sont données dans le tableau 3 ci-dessous qui montre :
- un niveau d'activité remarquable (maximum d'environ 40% de conversion de NOₓ à 490°C), compte tenu de la surface spécifique du catalyseur.
- une large zone de conversion des NOx allant de 400 à 600°C.

**TABLEAU 3**

| **Température** | **THC** | **TNO** | **TNO**_{**x**} |
|---|---|---|---|
| 349 | 0,0 | 1,4 | 0,0 |
| 398 | 5,2 | 1,6 | 2,9 |
| 449 | 29,5 | 15,3 | 20,2 |
| 499 | 62,7 | 32,8 | 39,7 |
| 549 | 86,5 | 27,5 | 32,9 |
| 599 | 94,6 | 18,3 | 16,3 |
| 650 | 97,1 | 17,4 | 5,6 |

### EXEMPLE 4

Cet exemple concerne un catalyseur de formule ZnGa₂O₄.

On utilise comme précurseurs des oxydes ZnO et Ga₂O₄ qui seront mélangés et broyés dans un mortier en agathe, puis pastillés à 1 tonne/cm². Le mélange est ensuite calciné sous air dans un creuset d'alumine. Le composé ZnGa₂O₄ est obtenu après 2 cycles de calcination à 1000°C pendant 15 h avec un broyage et un pastillage intermédiaire. Dans ces conditions, la diffraction des rayons X montre la présence de ZnGa₂O₄. La surface spécifique BET est inférieure à 0,50 m²/g.

Les performances du catalyseur sont données dans le tableau 4 ci-dessous qui montre :
- un bon niveau d'activité (maximum à environ 25% de conversion de NOₓ à 530°C), compte tenu de la très faible surface spécifique (< 0,50 m²/g).
- une zone de conversion des NOx allant de 400 à 650°C.

**TABLEAU 4**

| **Température** | **THC** | **TNO** | **TNO**_{**x**} |
|---|---|---|---|
| 300 | 0,0 | 5,9 | 1,0 |
| 349 | 0,0 | 7,4 | 2,4 |
| 399 | 0,0 | 6,6 | 3,3 |
| 448 | 2,7 | 8,4 | 7,8 |
| 499 | 19,1 | 16,6 | 19,7 |
| 548 | 55,0 | 21,0 | 22,1 |
| 599 | 86,3 | 12,0 | 9,9 |
| 648 | 94,7 | 8,2 | 6,4 |
| 676 | 97,0 | 10,9 | 5,4 |

Pour les exemples qui suivent le mélange réactionnel à l'entrée du réacteur a la composition suivante (en volume) :
- NO = 300 vpm
- C₃H₆ =300 vpm
- O₂ = 10%
- CO₂ = 10%
- H₂O = 10%
- N₂ = qsp 100%
- Charge catalytique = 300mg

Le débit global est de 10 Nl/h.

La VVH est de l'ordre de 20000 h⁻¹.

Par ailleurs, les catalyseurs sont préparés selon la méthode générale donnée ci-dessous:

Un mélange de sels, de sols ou encore d'oxydes en suspension est réalisé sous agitation par dissolution des sels ou mise en suspension des sols et oxydes; ceci dans un volume, approprié d'eau (concentration en sels : 0,25 à 1 M/l; suspensions 50 à 250 g/l). Ce mélange est coséché au sécheur Büchi avec une température d'entrée comprise entre 220° et 250°C, température de sortie entre 100 et 150°C, avec un débit de suspension de 1,5 ml/mn à 15 ml/mn.

La poudre ainsi obtenue est calcinée entre 500 et 900°C, montée programmée de 1°/mn à 5°/mn, palier compris entre 2 h et 6 h à cette même température.

### EXEMPLE 5

Cet exemple concerne un catalyseur de formule Zn_{0,9}Al₂O₄.

Il est préparé selon la méthode donnée ci-dessus en utilisant comme produits de départ Zn(NO₃)₂,6H₂O et Al(NO₃)₃,9H₂O.

Les performances sont données dans le tableau 5.

**TABLEAU 5**

| **Température** | **THC** | **TNO** | **TNO**_{**x**} |
|---|---|---|---|
| 350 | 3,2 | 0 | 0 |
| 400 | 5,5 | 0,1 | 2,8 |
| 450 | 11,9 | 3,1 | 5,0 |
| 500 | 33,4 | 11,7 | 14,6 |
| 550 | 74,3 | 40,4 | 30,0 |
| 600 | 94,8 | 44,2 | 27,6 |
| 650 | 99,9 | 33,4 | 18,0 |
| 700 | 100 | 23,3 | 11,1 |

### EXEMPLE 6

Cet exemple concerne un catalyseur de formule globale SnZnGa2O4 sur un support en alumine. La teneur en étain est de 1,6% en poids. Le catalyseur est préparé selon la méthode donnée ci-dessus en utilisant comme produits de départ Zn(NO₃)₂,6H₂O et Ga(NO₃)₃ en solution à 3,24M/l et une alumine mise en suspension. L'alumine utilisée est une alumine Condea calcinée à 800°C. La proportion en poids catalyseur/support en alumine est de 20/80.

Les performances sont données dans le tableau 6.

**TABLEAU 6**

| **Température** | **THC** | **TNO** | **TNO**_{**x**} |
|---|---|---|---|
| 300 | 2.0 | 0 | 0 |
| 350 | 4,5 | 0 | 0 |
| 400 | 10,6 | 0 | 1,6 |
| 450 | 26,7 | 2,5 | 6,5 |
| 500 | 58,3 | 16,8 | 20,2 |
| 550 | 90,4 | 29,8 | 32,9 |
| 600 | 98,7 | 21,2 | 23,9 |
| 650 | 100 | 9,7 | 11,2 |
| 700 | 100 | 1,8 | 4,0 |

### EXEMPLE 7

Cet exemple concerne un catalyseur de formule ZnGa2O4 sur un support en alumine. L'alumine utilisée est une alumine Condea calcinée 2h à 750°C. La proportion en poids catalyseur/support en alumine est de 20/80.

Les performances sont données dans le tableau 7.

**TABLEAU 7**

| **Température** | **THC** | **TNO** | **TNO**_{**x**} |
|---|---|---|---|
| 350 | 5,1 | 0 | 0 |
| 400 | 11,3 | 0 | 1,6 |
| 450 | 25,6 | 4,4 | 8,2 |
| 500 | 60.9 | 17,4 | 20,4 |
| 550 | 91,1 | 38,5 | 39,9 |
| 600 | 97,8 | 42,2 | 38,3 |
| 650 | 100 | 17,4 | 16,3 |
| 700 | 100 | 3,1 | 3,2 |

### EXEMPLE 8

Cet exemple concerne un catalyseur de formule MgAl₂O₄.

Le catalyseur est préparé selon la méthode donnée plus haut en utilisant comme produits de départ Mg(NO₃),6H₂O et Al(NO₃)₃,9H₂O. Il est utilisé dans les mêmes conditions que celles des exemples 5 à 7 mais dans une quantité de 1,59 et une WH de 10000 h⁻¹. Les performances sont données dans le tableau 8.

**TABLEAU 8**

| **Température** | **THC** | **TNO** | **TNO**_{**x**} |
|---|---|---|---|
| 400 | 0 | 0 | 0 |
| 450 | 2,2 | 1,2 | 0,7 |
| 500 | 12,6 | 14,7 | 14,7 |
| 550 | 49,7 | 33,9 | 33,8 |
| 600 | 83,6 | 7,7 | 3,7 |
| 650 | 92,4 | 16,5 | 7,2 |

## Revendications

1. Utilisation pour le traitement de gaz d'échappement présentant un excès en oxygène d'au moins 5%, en vue de la réduction des émissions des oxydes d'azote, d'un catalyseur comprenant soit un oxyde massique de structure spinelle et de formule ZnAl₂O₄ soit un oxyde de formule MgAl₂O₄, ledit oxyde ayant été obtenu par un procédé dans lequel on forme une solution ou suspension de sels des éléments constitutifs de la spinelle, on sèche par atomisation et on calcine le produit ainsi obtenu.

2. Utilisation pour le traitement de gaz d'échappement présentant un excès en oxygène d'au moins 5%, en vue de la réduction des émissions des oxydes d'azote, d'un catalyseur comprenant un oxyde de structure spinelle normale ou spinelle inverse qui répond à la formule (I) :
AB₂O₄
dans laquelle :
- soit B est le gallium, auquel cas A est au moins un élément choisi dans les groupes IIa, Ib, IIb, IIIb, IVb et Vb ainsi que les éléments de transition de la classification périodique;
- soit B est l'aluminium, auquel cas A est au moins un élément choisi dans les groupes IIa, à l'exception du magnésium, IIIb, IVb et Vb.

3. Utilisation selon la revendication 2, **caractérisée en ce que** l'oxyde répond soit à la formule (I) dans laquelle B est le gallium et A est au moins un élément choisi dans le groupe comprenant Mg, Ti, Mn, Fe, Zn et Sn ou une combinaison de Zn et Sn; soit à la formule (1) dans laquelle B est l'aluminium et A est au moins un élément choisi dans le groupe comprenant Ti, Mn, Fe et Sn ou une combinaison de Zn et Sn.

4. Utilisation selon la revendication 2 ou 3, **caractérisée en ce que** l'oxyde présente des lacunes.

5. Utilisation selon l'une des revendications 2 à 4, **caractérisée en ce que** l'oxyde utilisé de structure spinelle normale ou spinelle inverse est obtenu par un procédé dans lequel on forme une solution ou suspension de sels des éléments constitutifs de la spinelle, on sèche et on calcine le produit ainsi obtenu.

6. Utilisation selon la revendication 5, **caractérisée en ce que** l'oxyde utilisé est obtenu par un procédé dans lequel on sèche par atomisation.

7. Utilisation selon l'une des revendications 1 à 4, **caractérisée en ce que** l'oxyde utilisé de structure spinelle normale ou spinelle inverse est obtenu par un procédé dans lequel on effectue une combustion d'un mélange de précurseurs des éléments constitutifs de la spinelle et d'une source de carbone et d'azote.

8. Utilisation selon la revendication 7, **caractérisée en ce que** l'oxyde utilisé de structure spinelle normale ou spinelle inverse est obtenu par un procédé dans lequel la source de carbone et d'azote est l'urée ou la glycine.

9. Utilisation selon l'une des revendications précédentes, **caractérisée en ce que** le gaz d'échappement présente une teneur en oxygène d'au moins 10%.

## Patentansprüche

1. Verwendung eines Katalysators, der entweder ein Masseoxid mit Spinell-Struktur und der Formel ZnAl₂O₄ oder ein Oxid der Formel MgAl₂O₄ umfaßt, für die Behandlung von Auspuffgasen, die einen Überschuß an Sauerstoff von mindestens 5 % aufweisen, im Hinblick auf eine Reduzierung der Emissionen von Stickstoffoxiden, wobei das genannte Oxid durch ein Verfahren erhalten wird, bei dem man eine Lösung oder Suspension der Salze der Elemente bildet, aus denen der Spinell besteht, die Lösung durch Versprühen trocknet und das auf diese Weise erhaltene Produkt kalziniert.

2. Verwendung eines Katalysators, der ein Oxid mit normaler Spinell-Struktur oder inverser Spinell-Struktur umfaßt, das der Formel (I)
AB₂O₄
entspricht, in der
- entweder B Gallium ist, wobei in diesem Fall A mindestens ein Element bedeutet, das gewählt wird aus den Gruppen IIa, Ib, IIb, IIIb, IVb und Vb sowie den Übergangselementen des Periodensystems der Elemente;
- oder B Aluminium ist, wobei in diesem Fall A mindestens ein Element bedeutet, das gewählt wird aus den Gruppen IIa, mit Ausnahme von Magnesium, IIIb, IVb und Vb;
für die Behandlung von Auspuffgasen, die einen Überschuß an Sauerstoff von mindestens 5 % aufweisen, im Hinblick auf eine Reduzierung der Emissionen von Stickstoffoxiden.

3. Verwendung nach Anspruch 2, **dadurch gekennzeichnet, daß** das Oxid entweder der Formel (I), in der B Gallium ist und A mindestens ein Element bedeutet, das gewählt wird aus der Gruppe, die Mg, Ti, Mn, Fe, Zn und Sn oder eine Kombination von Zn und Sn umfaßt; oder der Formel (I) entspricht, in der B Aluminium ist und A mindestens ein Element bedeutet, das gewählt wird aus der Gruppe, die Ti, Mn, Fe und Sn oder eine Kombination von Zn und Sn umfaßt.

4. Verwendung nach Anspruch 2 oder 3, **dadurch gekennzeichnet, daß** das Oxid Lücken aufweist.

5. Verwendung nach einem der Ansprüche 2 bis 4, **dadurch gekennzeichnet, daß** das verwendete Oxid mit normaler Spinell-Struktur oder inverser Spinell-Struktur durch ein Verfahren erhalten wird, bei dem man eine Lösung oder Suspension der Salze der Elemante bildet, aus denen der Spinell besteht, die Lösung trocknet und das auf diese Weise erhaltene Produkt kalziniert.

6. Verwendung nach Anspruch 5, **dadurch gekennzeichnet, daß** das verwendete Oxid durch ein Verfahren erhalten wird, bei dem man durch Versprühen trocknet.

7. Verwendung nach einem der Ansprüche 1 bis 4, **dadurch gekennzeichnet, daß** das verwendete Oxid mit normaler Spinell-Struktur oder inverser Spinell-Struktur durch ein Verfahren erhalten wird, bei dem man die Verbrennung einer Mischung von Vorläufern der Elemente, aus denen der Spinell besteht, und einer Quelle von Kohlenstoff und Stickstoff durchführt.

8. Verwendung nach Anspruch 7, **dadurch gekennzeichnet, daß** das verwendete Oxid mit normaler Spinell-Struktur oder inverser Spinell-Struktur durch ein Verfahren erhalten wird, bei dem die Quelle von Kohlenstoff und Stickstoff Harnstoff oder Glycin ist.

9. Verwendung nach einem der vorstehenden Ansprüche, **dadurch gekennzeichnet, daß** das Auspuffgas einen Gehalt an Sauerstoff von mindestens 10 % aufweist.

## Claims

1. Use, for the treatment of exhaust gases having an excess of oxygen of at least 5% to reduce emissions of oxides of nitrogen, of a catalyst containing either a massive oxide with a spinel structure and with formula ZnAl₂O₄, or a massive oxide with formula MgAl₂O₄, said oxide having been obtained by a process in which a solution or suspension of salts of the constituent elements of the spinel is formed then spray dried, and the product obtained is calcined.

2. Use, for the treatment of exhaust gases having an excess of oxygen of at least 5% to reduce emissions of oxides of nitrogen, of a catalyst comprising an oxide with a normal or an inverse spinel structure with formula (I):
AB₂O₄
in which:
• either B is gallium, in which case A is at least one element selected from groups IIa, Ib, IIb, IIIb, IVb and Vb, also transition elements from the periodic classification;
• or B is aluminium, in which case A is at least one element selected from groups IIa with the exception of magnesium, IIIb, IVb and Vb.

3. Use according to claim 2, **characterised in that** the oxide has either formula (I) in which B is gallium and A is at least one element selected from the group formed by Mg, Ti, Mn, Fe, Zn and Sn, or a combination of Zn and Sn; or formula (I) in which B is aluminium and A is at least one element selected from the group formed by Ti, Mn, Fe and Sn or a combination of Zn and Sn.

4. Use according to claim 2 or claim 3, **characterized in that** the oxide exhibits voids.

5. Use according to any one of claims 2 to 4, **characterised in that** the oxide with the normal or inverse spinel structure is obtained by a process in which a solution or suspension of the salts of the constituent elements of the spinel is formed then dried, and the product obtained is calcined.

6. Use according to claim 5, **characterised in that** the oxide used is obtained by a process in which drying is carried out by spray drying.

7. Use according to any one of claims 1 to 4, **characterised in that** the oxide used with the normal or inverse spinel structure is obtained by a process consisting of combustion of a mixture of precursors of the constituent elements of the spinel and a source of carbon and nitrogen.

8. Use according to claim 7, **characterised in that** the oxide used with the normal or inverse spinel structure is obtained by a process in which the carbon and nitrogen source is urea or glycine.

9. Use according to any one of the preceding claims, **characterized in that** the exhaust gas has an oxygen content of at least 10%.
